Europäisches Patentamt

European Patent Office

Office européen des brevets

(11) Publication number: **0 386 837**
**A1**

## (12) EUROPEAN PATENT APPLICATION

(21) Application number: **90200495.1**

(22) Date of filing: **02.03.90**

(51) Int. Cl.⁵: **G11B 15/60, G11B 15/61, G03B 1/44**

(30) Priority: **08.03.89 NL 8900562**

(43) Date of publication of application:
**12.09.90 Bulletin 90/37**

(84) Designated Contracting States:
**DE FR GB**

(71) Applicant: **N.V. Philips' Gloeilampenfabrieken**
**Groenewoudseweg 1**
**NL-5621 BA Eindhoven(NL)**

(72) Inventor: **Wolf, Joost Marinus**
**c/o INT. OCTROOIBUREAU B.V., Prof.**
**Holstlaan 6**
**NL-5656 AA Eindhoven(NL)**

(74) Representative: **Van Weele, Paul Johannes**
**Frits et al**
**INTERNATIONAAL OCTROOIBUREAU B.V.**
**Prof. Holstlaan 6**
**NL-5656 AA Eindhoven(NL)**

(54) **Tape apparatus.**

(57) A tape apparatus (1) comprises elements past which a tape (32) is moved. These elements include, for example, a scanning unit (3) having a ruler (4), a height guide (11), a magnetic-head unit (7) and a capstan (2). By arranging these elements at suitable distances from one another it is possible to increase the tolerances within which, inter alia, the height guide (11) should be adjusted to ensure a correct contact between the tape, for example a magnetic tape (32), and the scanning unit (3) and between the tape and the magnetic-head unit (7).

FIG. 4

EP 0 386 837 A1

## Tape apparatus.

The invention relates to a tape apparatus constructed to cooperate with a tape, in particular a magnetic tape, comprising the following elements:
- a ruler which is in contact with a first tape edge during operation,
- a height guide which is in contact with a second tape edge during operation, and
- a tape transport element,
which elements define a tape-transport path which extends from the ruler up to the tape-transport element via one end of the ruler and the height guide, which apparatus further comprises a further element arranged in the tape-transport path between the height guide and the tape-transport element, which further element is in contact with the tape over the full tape width during operation, the first tape edge of the tape portion between the ruler and the height guide being situated at the same level as the ruler or being spaced from the ruler in the direction of the second tape edge during operation.

Such a tape apparatus is generally known inter alia as a video recorder. In such a recorder the magnetic tape is wrapped around a drum-shaped scanning unit along a helical path the signal transfer being effected via rotating magnetic heads. This drum-shaped scanning unit is equipped with a ruler. In a video recorder the tape-transport element comprises a capstan. Between the capstan and the ruler a height guide is arranged and a further element which constitutes a stationary magnetic head unit for reading, recording and erasing a longitudinal track on the magnetic tape. This magnetic-head unit is arranged in the tape-transport path of the scanning unit at a distance prescribed by a standard.

In said tape-transport path a proper contact of the magnetic tape with the ruler and with the rotating magnetic heads of the scanning unit is required. If the magnetic tape comes off the ruler this will result in the path of the magnetic heads over the magnetic tape being changed relative to a first tape edge cooperating with the ruler, so that the track as prescribed by the standard is no longer followed correctly. Moreover, at the location where the magnetic tape leaves the scanning unit the pressure of the magnetic tape against the magnetic head should still be adequate to guarantee a correct signal transfer. Moreover, proper contact between the magnetic tape and the magnetic-head unit is required. In addition, the magnetic tape should also be pressed against the magnetic-head unit at the location of the head gaps in order to guarantee a correct signal transfer.

In order to meet the requirement of a proper contact between the tape and the ruler the tape path should be adjusted accurately. This adjustment is effected by adjusting the tape-guide elements situated in the tape path. The tape path can be adjusted by means of two different known methods in order to obtain a correct contact between the tape and the ruler.

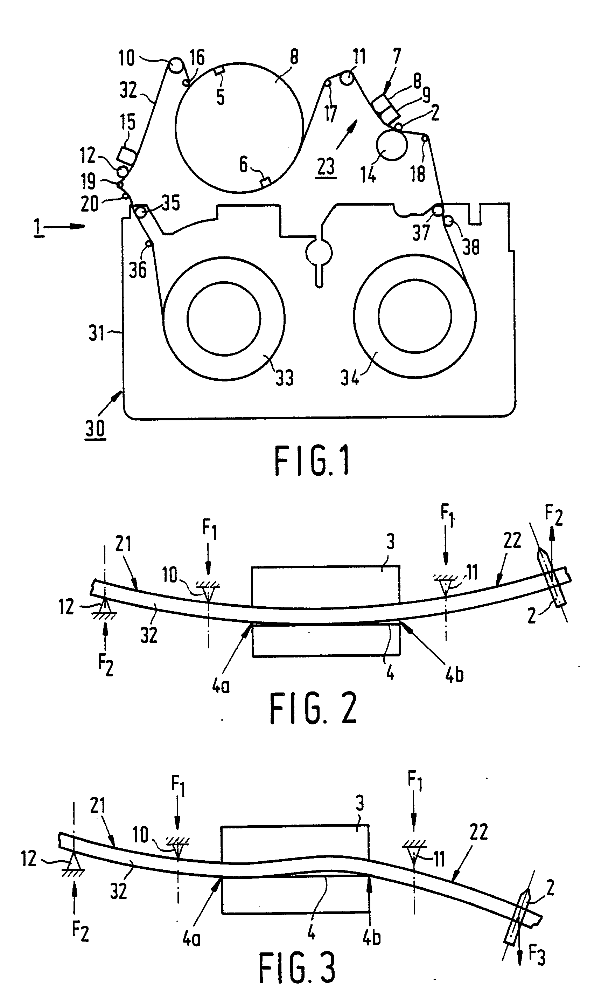

In accordance with the first method (Fig. 2) the tape is pressed onto the ruler by arranging two elements both in the entry branch and in the exit branch of the tape on the ruler. The tape is pressed onto the ruler in that in each branch the elements arranged nearest the ruler subject the tape to a force directed towards the ruler and in that the other elements subject the tape to a force directed away from the ruler. However, the tape then virtually peels off the ruler at the points where it enters and leaves the ruler, so that at the location of the entry and exit points the magnetic tape is clear of the ruler. However, the clearance caused by this peel-off effect is so small that it has no undesirable consequences for the above requirement that the magnetic head should correctly follow the track on the magnetic tape.

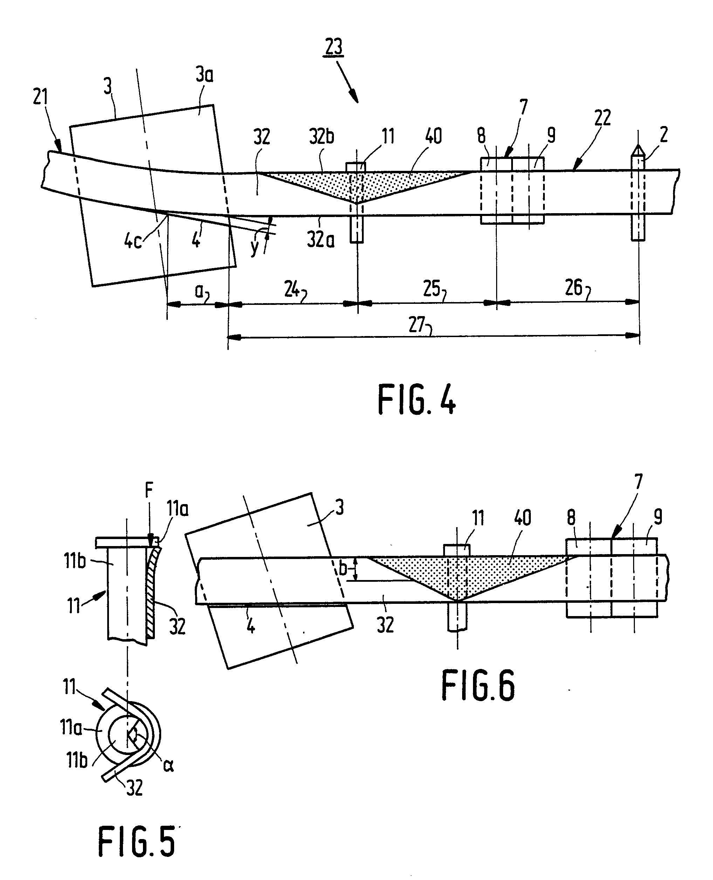

In accordance with the second method (Fig. 3) the entry branch is loaded in the same way as described above. As a result of this the tape peels off the ruler at the point of entry. However, in the exit branch the tape is loaded in such a way by one or two elements that near the exit point the tape is lifted off the ruler because the tape is tilted about the exit point. This can be effected in two ways. One way is to subject the tape in the exit branch to a force directed towards the ruler by means of one element (see Fig. 3). Another way is by subjecting the tape to a force in the exit branch at two locations in the same way as in the first method, the forces exerted on the tape now being such that the tape is tilted about the exit point.

The tape-path adjustment in the magnetic-tape exit branch the scanning unit is found to be more critical than the tape-path adjustment in the entry branch. Therefore, the tape-path adjustment in the exit branch should be rendered less critical in order to widen the tolerances of the tape-path adjustment.

Moreover, for the tape-guide elements in the exit branch of the tape path, the adjustment range within which the requirement of tape-ruler contact is met using the second method is found to be smaller than in the case of adjustment in accordance with the first method. Therefore, the permissible tolerances for the adjustment of the tape path in accordance with the first method are larger than in accordance with the second method and, in order to obtain wider tolerances for the adjustment of the elements in relation to a correct track straightness, the tape path should preferably be adjusted in accordance with the first method.

However, it is found that the permissible tolerances within which the elements should be adjusted are dependent upon the mutual distances between said elements in the apparatus. These distances also influence the tolerances within which said elements should be adjusted for a correct tape-head contact both at the scanning unit and at the magnetic-head unit in order to achieve a satisfactory signal transfer.

It is an object of the invention, in tape apparatuses in which the tape path is adjusted at least partly in accordance with the first method, to extend the adjustment range of said elements within which the contact between, on the one hand, the tape and, on the other hand, the ruler and on a further element is satisfactory in order to obtain a correct operation of the tape apparatus. In the case of a video recorder this correct operation of the tape apparatus means that both between the magnetic tape and the scanning unit and between the magnetic tape and the magnetic head unit a correct signal transfer is obtained.

To this end the invention is characterized in that in the tape-transport path the distance between said further element and the height guide is equal to at least two times the distance between the further element and the tape-transport element. As a result of this, the adjustment of the height guide becomes less critical, so that larger tolerances are permissible. This can be explained as follows. The adjustment of the height guide results in a specific force being exerted on the second tape edge of the tape by this guide. This gives rise to a moment in the tape. This moment is maximal at the location of the height guide. This leads to a compressive stress in a part of the tape, causing the tape to curl up (see Figs. 5 and 6). Since the tape is not capable of absorbing compressive stress a substantially stress-free zone will arise in the tape. The size of the stress-free zone in the direction of the tape width will decrease as the distance from the height guide increases. If the tape-to-head contact occurs in such a stress-free zone of the tape this contact between the tape and the head will not be adequate for a correct signal transfer. To achieve a correct signal transfer the tape-to-head contact should occur outside the stress-free zone so that there is an adequate tensile stress in the tape to press the tape against the magnetic head. The maximum attainable stress-free zone occurs if the size of the zone in the direction of the tape width at the location of the height guide is substantially equal to the width of the tape (see Fig. 6). The maximum permissible adjustment range of the height guide is obtained if the stress-free zone is allowed to have the maximum size, i.e. substantially the full width of the tape. For the contact between the magnetic tape and the magnetic-head unit this means that if the stress-free zone cannot be situated in the magnetic tape at the location of the magnetic-head unit the stress-free zone may assume its maximal size. The size of the stress-free zone is dictated by the locations where the reactive forces, which are caused by the load exerted on the magnetic tape by the height guide, act on the magnetic tape. These reactive forces are transmitted to the magnetic tape by the capstan and the ruler. Calculations have demonstrated that the stress-free zone between the height guide and the capstan extends up to a maximum of two thirds of said distance from the height guide in the direction of the capstan. When the distance between the height guide and the magnetic-head unit is made at least two times as large as the distance between the magnetic-head unit and the capstan the stress-free zone can never extend to a location on the magnetic-head unit. If these conditions are satisfied the adjustment of the height guide is not subject to any restriction as regards the requirement that the stress-free zone should not be situated at the location of the magnetic-head unit. As a result of this, the permissible adjustment tolerances for the height guide are larger than in the situation that allowance must be made for this requirement, i.e. in the case that the distance between the height guide and the magnetic-head unit is smaller than twice the distance between the magnetic-head unit and the capstan. If the maximum permissible force on the edge of the magnetic tape is exceeded, this will result in damage to the tape.

An embodiment of the tape apparatus in accordance with the invention concerns an apparatus in which the ruler is situated on a wall with which the tape is in contact over its full width during operation and in which the tape is spaced from the ruler, in the direction of the second tape edge, at the location of the end of the ruler and, at a distance $a$ from the end of the ruler, is in contact with the ruler. This is the case in video recorders in which the tape path is adjusted in accordance with the first method, the wall then being the drum wall of the scanning unit. This embodiment of the tape apparatus is characterized in that in the tape-transport path the distance of said end of the ruler from the height guide is equal to at least two times the distance $a$. Calculations similar to those mentioned above show that between the height guide and the point on the ruler which transmits the reactive forces to the magnetic tape which are caused by the load exerted by the height guide, the stress-free zone extends from the height guide in the direction of the ruler over a maximum length equal two thirds of the distance between said point and the height guide. in order to guarantee a correct tape-to-head contact the magnetic tape should be in contact with the wall over the full width at the location of the end of the ruler and the stress-free zone should not occur in the magnetic tape at the location of the ruler. By ensuring that the distance between the end of the ruler and the height guide is larger than or equal to twice the distance between said point and the end of the ruler a proper tape-to-head contact is guaranteed. The stress-free zone can then never extend up to the wall of the scanning unit and no further restrictions or limitations are imposed on the adjustment range of the height guide.

A further embodiment of the tape apparatus in accordance with the invention is characterized in that the distance in the tape-transport path between the ruler and the height guide is larger than 0.25 times and smaller than 0.65 times the distance in the tape-transport path between the ruler and the tape-transport element.

The maximum permissible load on the edge of the tape imposes a further limit on the adjustment range of the elements, in particular on the adjustment of the height guide. If the maximum permissible force on the edge of the magnetic tape is exceeded, this will result in the tape being damaged. If the tape curls up to a maximum extent at the location of the height guide, i.e. over substantially the entire width of the tape, the force on the tape edge will also be maximal. Calculations show that the magnitude of this maximum force on the edge of the tape depends on the location of the height guide in the tape-transport path. When a minimum is determined for the magnitude of this maximal force this will reduce the likelihood of this force exceeding the maximum permissible force on the tape edge. Calculations show that this minimum occurs if the distance between the scanning unit and the height guide is equal to 0.45 times the distance between the scanning unit and the capstan. Since this maximum force as a function of the location of the height guide in the tape-transport path is comparatively steady around the minimum it will be adequate to arrange the height guide within said limits. This enables the maximum attainable adjustment range of the height guide (which is obtained if the stress-free zone can assume the maximum size, i.e. substantially across the entire width of the tape) to be utilised, while the force to which the tape edge is subjected by the height guide are minimal.

Yet another embodiment of the tape apparatus in accordance with the invention relates to a helical-scan magnetic-tape apparatus in which the ruler is arranged on a scanning unit comprising at least one rotary magnetic head, the further element being constituted by a stationary magnetic-head unit and the tape-transport element comprising a capstan. Such an apparatus is generally known as a video recorder. This embodiment is characterized in that the distance in the tape-transport path between the height guide and the scanning unit is larger than 31 mm. A larger distance between the scanning unit and the height guide widens the permissible tolerances within which the height guide is to be adjusted in relation to an adequate tape-to-head contact at the scanning unit for which a correct signal transfer is obtained. This can be explained as follows. By arranging the height guide further away from the scanning unit the maximum permissible force on the tape as a result of the adjustment of the height guide, for which the stress-free zone of the tape is still situated at a satisfactory distance from the scanning unit, will increase. This force is obtained by the adjustment of the height guide. Consequently, the adjustment becomes less critical, so that larger tolerances are permissible.

It is to be noted that this distance of 31 mm preferably applies to apparatuses in accordance a standard in which the apparatuses cooperate with a magnetic tape having a width of half an inch.

Embodiments of a tape apparatus in accordance with the invention will now be described in more detail, by way of example, with reference to the Figures. In the drawings:

Fig. 1 shows a lay-out of a deck of a first embodiment of a tape apparatus in accordance with the invention, constructed as a helical-scan magnetic-tape apparatus provided with a magnetic-tape cassette,

Fig. 2 shows a tape path in the helical-scan magnetic-tape apparatus near a scanning unit adjusted in accordance with a first method,

Fig. 3 shows a tape path in the helical-scan magnetic-tape apparatus near a scanning unit adjusted in accordance with a second method,

Fig. 4 shows a lay-out of a tape-transport path in the helical-scan magnetic-tape apparatus between a scanning unit and a capstan,

Fig. 5 shows a tape in partly curled-up condition as a result of a load exerted by the height guide,

Fig. 6 shows the maximal stress-free zone obtained in a tape as a result of the tape being curled up owing to the load exerted by a height guide,

Fig. 7 shows a lay-out of a second embodiment of a tape apparatus in accordance with the invention, constructed as an audio magnetic-tape apparatus, and

Fig. 8 shows a lay-out of a tape-transport path of a third embodiment of a tape apparatus in accordance with the invention, constructed as a film projector.

Fig. 1 shows diagrammatically a lay-out of a first embodiment of a tape apparatus in accordance with the invention, constructed as a helical-scan magnetic-tape apparatus 1. The helical-scan magnetic-tape apparatus 1 comprises a ruler 4 (Figure 4) on a wall 3a of a drum-shaped rotatable scanning unit 3 provided with rotary magnetic heads 5 and 6. In operation the ruler guides a first tape edge 32a of a magnetic tape 32 which is fed past the wall 3a of the scanning unit 3 by a tape-transport element 2. The tape-transport element comprises a capstan 2 which cooperates with a pressure roller 14. In order to ensure proper contact between the magnetic tape 32 and the ruler 4 a height guide 11 is arranged between the scanning unit 3 and the capstan 2. In operation the height guide 11 is in contact with a second tape edge 32b. The ruler 4, the height guide 11 and the capstan 2 define a tape-transport path 23. The tape-transport path extends from the ruler 4 to the capstan 2 via an end 4b of the ruler 4 and the height guide 11. A further element 7 is arranged between the height guide 11 and the capstan 2. This further element is constituted by a magnetic-head unit 7 comprising two stationary magnetic heads 8 and 9. The magnetic-head unit 7 serves for reading and/or writing information, for example audio or index information, in longitudinal tracks on the magnetic tape 32. The magnetic tape 32 should be in contact over its full width with the magnetic-head unit 7 in order to guarantee a correct signal transfer, because the longitudinal tracks are situated near the first and the second tape edge 32a and 32b. There is also provided a stationary erase head 15, which is constructed to erase both the longitudinal and the inclined tracks on the magnetic tape 32. For threading the magnetic tape 32 out of the cassette 30 the apparatus 1 comprises tape-threading elements 16, 17 and 18. The cassette 30 comprises a main wall 31 provided with guide elements 35, 36, 37 and 38, which guide the magnetic tape 32 which is wound on reels 33 and 34. For guiding the tape 32 in the apparatus the apparatus 1 further comprises a tape guide 20, a tape-tension sensor 19 and height guides 10, 11 and 12.

Figs. 2 and 3 show the loads $F_1$, $F_2$, $F_3$ exerted on the tape 32 in order to obtain a satisfactory tape-to-ruler contact when the elements 10, 11, 12 and 2 are adjusted in accordance with the first and the second methods described in the introductory part.

In order to enable the requirement of a satisfactory contact between the tape 32 and the ruler 4 to be met the tape transport should be adjusted accurately. As already stated, this can be effected by means of two different known methods. These two methods will now be described in more detail with reference to Figs. 2 and 3.

In the first method (Fig. 2) the tape 32 is pressed onto the ruler 4 by arranging elements both in the entry branch 21 and in the exit branch 22 of the tape 32 at the ruler 4. The elements in the entry branch 21 comprise two height guides 10 and 12 and the elements in the exit branch 22 comprise a height guide 11 and a capstan 2. When the elements 10 and 11 arranged nearest the ruler 4 in each branch subject the tape 32 to a force $F_1$ which is directed towards the ruler 4 and the other elements 2 and 12 subject the tape to a force $F_2$ which is directed away from the ruler 4, the tape 32 will be pressed onto the ruler 4. However, the tape 32 then virtually peels off the ruler 4 at the two ends 4a and 4b of the ruler 4. As a result of this the magnetic tape 32 will be situated at a distance y from the ruler 4 at the location of the end 4b of the ruler 4. In practice, the influence of this distance y on the head-tape contact is negligible. At a distance a from the end 4b of the ruler 4 the magnetic tape 32 is again in contact with the ruler 4 at point 4c. The ends 4a and 4b of the ruler 4 coincide with the entry and exit points 4a and 4b.

In accordance with the second method (Fig. 3) the entry branch 21 is loaded in the same way as described above. As a result of this, the tape 32 peels off the ruler 4 at the entry point 4a. However, in the exit branch 22, the tape 32 is loaded by one or two elements 2, 11 in such a way that at the location of the exit point 4b the tape 32 is lifted off the ruler 4, so that the tape is tilted about the exit point 4b. This can be achieved in two ways. One way is to exert a force $F_3$ on the tape 32 by only one element 2 in the exit branch 22, which force is directed towards the ruler 4 (Fig. 3). Another way is, similar to in the first method, to exert a force on the tape 32 at two locations in the exit branch 22, the forces thus exerted on the tape now being such that the tape is tilted about the exit point 4b.

As already stated hereinbefore, it is found that the tape-path adjustment in the exit branch 22 of the tape at the scanning unit 3 is more critical than the tape-path adjustment in the entry branch 21. Consequently, in order to widen the tolerances the tape-path adjustment should, first of all, be rendered less critical in the exit branch 22.

Moreover, it is found that with the latter method the adjustment range within which the requirement of a satisfactory contact between the tape and the ruler is met for the exit branch 22 is smaller than in the case of adjustment in accordance with the first method.

It is also found that the magnitude of these permissible tolerances depends on the distances (Fig. 4) between said elements in the apparatus. These mutual distances also influence the tolerances within which the height guide 11 and the capstan 2 should be adjusted in order to obtain a tape-to-head contact, both at the scanning unit 3 and at the magnetic-head unit 7, which is adequate to ensure correct signal transfer.

Fig. 4 shows the exit branch 22 of the tape 32 at the scanning unit 3. The stress-free zone 40 in the tape 32 resulting from the force exerted on the tape 32 by the height guide 11 should not extend up to a location on the wall 3a of the scanning unit 3 in view of the tape-to-head contact. Increasing the distance 24 between the scanning unit 3 and the height guide 11 results in an increased adjustment range of the height guide 11, for which the stress-free zone 40 remains outside the location of contact of the tape 32 with the wall 3a of the scanning unit 3 and for which the tensile stress in the tape is adequate to ensure a correct tape-to-head contact.

Said stress-free zone 40 can be explained as follows. It is assumed that a tape 32 exhibits a specific tensile stress in the longitudinal direction caused by said tape being wrapped around a pin 11b or roller at a specific wrapping angle $\alpha$ (Fig. 5). If a force F acting in the width direction of the tape 32 and directed towards the tape is exerted on a tape edge at the location of said pin 11b, or roller, this will give rise to a moment in the tape. This moment is maximal at the location of the height guide 11. The stress distribution in the tape 32 as a result of this moment varies from a maximal tensile stress in the first tape edge 32a to a maximal compressive stress in the second tape edge 32b. Since the tape is not capable of absorbing compressive stress the tape will curl up at the location of that part of the tape where the compressive stress is greater than the obtaining tensile stress (Fig. 5). The width b of the curled-up portion decreases as the distance from the point of action of the force increases (Fig. 6) and even becomes zero if this distance is large enough. The maximum stress-free zone 40 is obtained if the tape 32 is nearly curled up over its full width, as is illustrated in Fig. 6.

The magnitude of the maximum permissible force on the tape edge depends inter alia on the wrapping angle $\alpha$ of the tape around the pin 11b (Fig. 5). For the present adjustments it is also necessary that at the location of the height guide 11 the tape is wrapped around a pin or roller 11b over an angle which depends on said force. In addition to a diametrally projecting rim 11a said height guides 10, 11 and 12 also comprise a pin or roller 11b, see Fig. 5.

Said stress-free zone 40 in the tape 32 should not be situated at the location of contact between the magnetic-head unit 7 and the tape 32. If the distance 25 in the tape-transport path 23 between the height guide 11 and the magnetic-head unit 7 is larger than or equal to two times the distance 26 in the tape-transport path 23 between the magnetic-head unit 7 and the capstan 2, it follows from calculations that the stress-free zone 40 cannot be situated at the location of the magnetic-head unit 7.

In order to enable the maximum adjustment range of the height guide 11 to be utilized, the limits of this range corresponding to the situation in which there is no stress-free zone 40 in the tape 32 and the situation in which the maximum stress-free zone 40 is obtained in the tape 32, the force exerted on the edge of the tape 32 by the height guide 11 should be variable between zero and a maximum value. The maximum value is found to be dependent upon the location of the height guide 11 in the tape-transport path 23. This maximum force appears to be minimal if the distance 24 between the scanning unit 3 and the height guide 11 is equal to 0.45 times the distance 27 between the scanning unit 3 and the capstan 2. Since this maximum force as a function of the location of the height guide 11 in the tape-transport path 23 is substantially steady it will be adequate to make the distance 24 between the scanning unit 3 and the height guide larger than 0.25 times the distance 27 and smaller than 0.65 times the distance 27 for a satisfactory limitation of the maximum forces exerted on the tape edge.

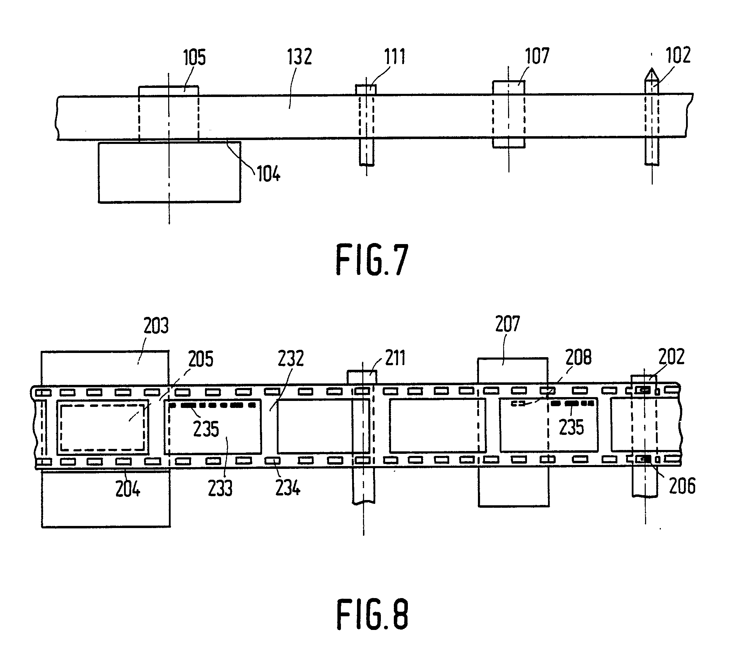

The invention is not limited to the above method of adjusting the tape transport in a video recorder. This adjustment method may also be applied wholly or in part to tape-path adjustments in a variety of equipment in which a tape should be pressed correctly onto a guide at the specific location. This may occur, for example, in magnetic-tape apparatuses comprising stationary magnetic heads instead of the above-mentioned scanning unit having rotatable magnetic heads. A tape apparatus comprising stationary magnetic heads is, for example, an audio magnetic-tape apparatus. Figure 7 shows a lay-out of a tape-transport path of such an apparatus. In this case the magnetic tape 132 should be in contact with a stationary magnetic head 105 in a correct position and should contact the stationary magnetic head 105 and an erase head 107 over the full tape width. For this purpose a ruler 104 is arranged at the location of the stationary magnetic head and a height guide 111 is arranged between the ruler 104 and a capstan 102.

The adjustment method described herein can also be used in apparatuses used in conjunction with non-magnetic tapes. Figure 8 shows an example of this, constructed as a film projector. In this projector a film 232 should be moved past a projection unit 203 at a correct angle and with a correct height. For this purpose a ruler 204 is arranged at a fixed distance from a projection aperture 205. Moreover, a height guide 211 is arranged in the film path between the projection unit 203 and a film-transport wheel 202. This wheel has sprocket teeth 206 which provide the film transport via the sprocket holes 234 in the film 232. A scanning element 207 is arranged between the transport wheel 202 and the height guide 211 to read the encoded sound information from the film 232. For this purpose the scanning element 207 comprises a light-sensitive element 208 for scanning a signal generated by transparent and opaque areas 235 at the edge of a frame 233. For a correct operation the film 232 should then be in contact with the scanning element 207 over the full film width.

## Claims

1. A tape apparatus constructed to cooperate with a tape, in particular a magnetic tape, comprising the following elements:
- a ruler which is in contact with a first tape edge during operation,
- a height guide which is in contact with a second tape edge during operation, and
- a tape-transport element,
which elements define a tape-transport path which extends from the ruler up to the tape-transport element via one end of the ruler and the height guide, which apparatus further comprises a further element arranged in the tape-transport path between the height guide and the tape-transport element, which further element is in contact with the tape over the full tape width during operation, the first tape edge of the tape portion between the ruler and the height guide being situated at the same level as the ruler or being spaced from the ruler in the direction of the second tape edge during operation, characterized in that in the tape-transport path the distance between said further element and the height guide is equal to at least two times the distance between the further element and the tape-transport element.

2. A tape apparatus as claimed in Claim 1, in which the ruler is situated on a wall with which the tape is in contact over its full width during operation and in which the tape is spaced from the ruler, in the direction of the second tape edge, at the location of the end of the ruler and, at a distance $a$ from the end of the ruler, is in contact with the ruler, characterized in that in the tape-transport path the distance of said end of the ruler from the height guide is equal to at least two times the distance a.

3. A tape apparatus as claimed in Claim 1 or 2, characterized in that in the tape-transport path the distance between the ruler and the height guide is larger than 0.25 times and smaller than 0.65 times the distance in the tape-transport path between the ruler and the tape-transport element.

4. A tape apparatus as claimed in Claim 1, 2 or 3, in which the ruler is arranged on a scanning unit comprising at least one rotary magnetic head, the further element being constituted by a stationary magnetic-head unit and the tape-transport element comprising a capstan, characterized in that the distance in the tape-transport path between the height guide and the scanning unit is larger than 31 millimetres.

FIG.1

FIG. 2

FIG.3

FIG. 4

FIG.6

FIG.5

## FIG.7

## FIG.8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | PATENT ABSTRACTS OF JAPAN vol. 9, no. 72 (P-345)(1795) 02 April 1985, & JP-A-59 203262 (TOSHIBA) 17 November 1984, * the whole document * | 1, 2, 4 | G11B15/60 G11B15/61 G03B1/44 |
| A | EP-A-211542 (SONY CORP.) * page 12, line 10 - page 14, line 30; figures 6A-7 * | 1, 4 | |
| A | EP-A-177162 (SONY CORP.) * page 1, lines 6 - 28; figures * | 1, 4 | |
| A | GB-A-2149958 (NIPPON VICTOR) | | |
| A | EP-A-022298 (PHILIPS) | | |
| A | US-A-2456702 (J.A.HARINGX) | | |
| | | | **TECHNICAL FIELDS SEARCHED (Int. Cl.5 )** |
| | | | G11B G03B |

The present search report has been drawn up for all claims

| Place of search | Date of completion of the search | Examiner |
|---|---|---|
| THE HAGUE | 25 JUNE 1990 | DECLAT M.G. |